# EUROPEAN PATENT SPECIFICATION

(11) **EP 0 389 630 B1**
(45) Date of publication and mention of the grant of the patent: **03.11.1993**
(21) Application number: 89907830.7
(22) Date of filing: 30.06.1989
(51) Int. Cl.: B29C 45/77

(54) **METHOD OF CONTROLLING INJECTION OF AN ELECTRICALLY DRIVEN INJECTION MOLDING MACHINE**
VERFAHREN ZUR EINSPRITZKONTROLLE VON ELEKTRISCH ANGETRIEBENEN SPRITZGIESSMASCHINEN
METHODE DE REGLAGE DE L'INJECTION DANS UNE MACHINE DE MOULAGE PAR INJECTION A COMMANDE ELECTRIQUE

(30) Priority: 08.07.1988 JP 169085/88
(43) Date of publication of application: 03.10.1990
(73) Proprietor: FANUC LTD., Minamitsuru-gun, Yamanashi 401-05 (JP)
(72) Inventor: KAMIGUCHI, Masao Room 6-207 Fanuc Manshonharimomi, Minamitsuru-gun Yamanashi 401-05 (JP); TAIRA, Takayuki, Hachioji-shi Tokyo 193 (JP); NEKO, Noriaki Fanuc Dai-3 Vira-Karamatsu, Minamitsuru-gun Yamanashi 401-05 (JP); HOSOYA, Yuichi Fanuc Dai-3 Vira-Karamatsu, Minamitsuru-gun Yamanashi 401-05 (JP)
(74) Representative: Billington, Lawrence Emlyn
(86) International application number: PCT/JP89/00662
(87) International publication number: WO 90/00468

(56) References cited:
- JP-A-63 081 015

## Description

The present invention relates to an injection control method in an electrically-operated injection molding machine, according to the preamble of claim 1.

JP-A-63-81015 discloses an injection control method according to the preamble of the attached claim 1, wherein the screw is suddenly accelerated by the supply of additional drive current to the injection motor from an additional driver amplifier.

Depending on different types of molded products, it is sometimes desirable to more sharply raise the injection speed upon start of an injection process. To this end, in a conventional hydraulic injection molding machine, an accumulator is provided, which is connected to a hydraulic injection cylinder for supply of pressurized operating oil at a large flow rate to the same cylinder. On the other hand, an electrically-operated injection molding machine may employ an injection servomotor of a type capable of producing large output with small inertia. However, an injection molding machine, equipped with an accumulator or an injection motor of the large output, small inertia type, is costly.

The object of the present invention is to provide an injection control method in an electrically-operated injection molding machine, which is capable of sharply raising the injection speed even in the case of a low-priced electric injection molding machine.

In order to achieve the above-mentioned object, according to the present invention, there is provided an injection control method in an electrically-operated injection molding machine of a type driving an injection servomotor in accordance with an error between a target value and an actual value of an injection control parameter comprising the steps of: (a) substantially preventing drive of the injection servomotor at an initial stage of injection control, while the target value of the injection control parameter is increased; and (b) starting the drive of the injection servomotor when the error between the target value and the actual value of the injection control parameter reaches a predetermined value.

As mentioned above, according to the present invention, the injection servomotor is capable of generating a great output torque upon start of the drive of the servomotor, even if the same servomotor is of a type other than a large output, small inertia type. This is achieved because the target value of the injection control parameter associated with the drive of the injection servomotor is increased, with drive of the injection servomotor kept substantially prevented. The drive of the injection servomotor is started when the error between the target value and the actual value of the injection control parameter reaches the predetermined value. Accordingly, the injection speed can rise rapidly even in a less costly injection molding machine, so that injection molding is carried out with a desired injection characteristic.

### Brief Description of the Drawings

Fig. 1 is a view showing an operational principle of an injection control method according to an embodiment of the present invention;
Fig. 2 is a block diagram showing the main part of an injection molding machine to which the injection control method of Fig. 1 is applied;
Fig. 3 is a block diagram showing a servo circuit of Fig. 2; and
Fig. 4 is a flowchart showing an injection control process executed by a control unit of Fig. 2.

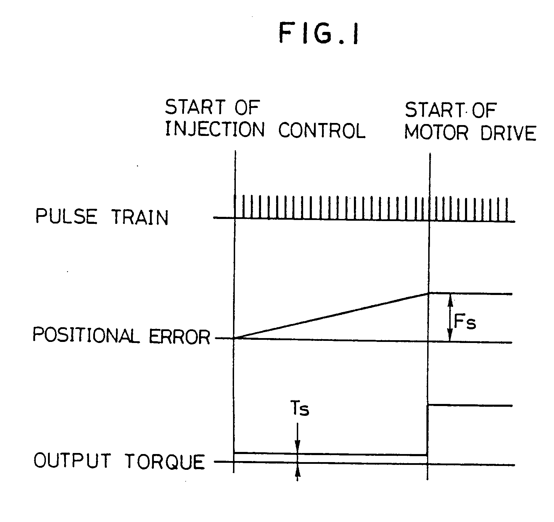

At first, with reference to Fig. 1, an operational principle of an injection control method according to an embodiment of the present invention will be explained.

In injection control of a type wherein command pulses are periodically distributed to a servo circuit to provide a target rotational position, varying in dependence on an amount of pulse distribution, of an injection servomotor connected to the servo circuit for driving the same motor, conventionally, the pulse distribution amount per pulse distribution period is acceleratedly increased from the start of an injection process with the elapse of time, and at the same time, an actual servomotor rotational position is immediately caused to follow the target rotational position from an instant at which the injection process is started, so that an injection screw is caused to be axially moved simultaneously with the start of supply of a command pulse train. In order to rapidly raise the injection speed in the aforementioned injection control, the rotation rate of the injection servomotor must be increased rapidly upon start of the axial movement of the injection screw. To this end, conventionally, a great output, low inertia injection servomotor is employed.

The injection control method of the present invention is intended to achieve this without the need of a large output, low inertia injection servomotor. In other words, the invention contemplates generating a large motor output torque upon start of the axial movement of the injection screw even by the use of an ordinary servomotor. To this end, at an initial stage of supply of a command pulse train, drive of the injection servomotor, i.e., axial movement of the injection screw, is substantially prevented. More specifically, a torque limit value Ts for restricting the output torque of the injection servomotor is set to a value enough to establish the equilibrium of the motor output torque and a resin pressure, i.e., a pressure of molten resin within a heating cylinder, which accommodates therein the injection screw, acting on the same screw. Subsequently, the drive of the injection servomotor is first started when a target rotational position of the injection servomotor, which has been increased while an increase in an actual rotational position of the motor is kept substantially prevented, reaches a predetermined value (a feed stop positional error Fs), i.e., when the error between the target rotational position and the actual rotational position reaches the predetermined value. More specifically, the application of the torque limit value Ts is released when the feed stop positional error Fs is reached. As a result, at the start of motor rotation, the injection servomotor is supplied with a great drive electric current determined by the actual positional error which is increased to the value Fs. Thus, the injection servomotor generates a great output torque so as to axially drive the injection screw with a great driving force. As a consequence, the injection speed rises rapidly.

Meanwhile, the feed stop positional error Fs is a control parameter which is associated with a conventionally known feed stop function of an injection molding machine, and the feed stop function is rendered effective from an instant at which the actual positional error exceeds the value Fs to an instant the actual positional error becomes less than the value Fs again, so as to temporarily stop the distribution of the command pulses.

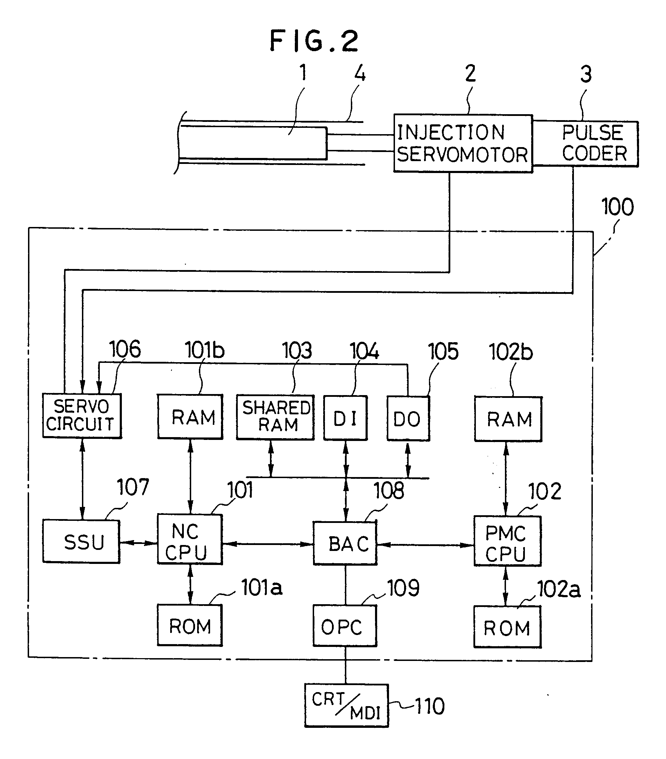

An electrically-operated injection molding machine to which the injection control method according to an embodiment of the present invention is applied, comprises various operating sections (not shown) such as injection mechanism, screw rotation mechanism, mold-clamping mechanism, eject mechanism, and is so arranged to control the drive of these operating sections by means of a numerical control unit (hereinafter, referred to as NC unit), mentioned later, and a programmable machine controller (not shown). The injection mechanism includes an injection servomotor 2 (Fig. 2), consisting of a D.C. servomotor, for instance, having a pulse coder 3 and operable to axially drive a screw 1 disposed within a heating cylinder 4 through a rotary motion/linear motion conversion mechanism (not shown).

Referring to Fig. 2, the NC unit 100 includes a central processing unit for numerical control (hereinafter, referred to as NCCPU) 101 to which connected are a ROM 101a storing therein a management program for globally controlling the injection molding machine, and a RAM 101b for temporal storage of data. Further, servo circuits for controlling the drive of servomotors of the various operating sections are connected to the NCCPU through a servo interface 107 (only the servo circuit corresponding to the injection servomotor 2 is shown by reference numeral 106). The NC unit 100 further includes a central processing unit for the programmable machine controller (hereinafter, referred to as PMCCPU) 102 to which connected are a ROM 102a storing therein, e.g., a sequence program for controlling a sequence operation of the injection molding machine, and a RAM 102b for temporal storage of data.

Reference numeral 103 denotes a non-volatile shared RAM, consisting of bubble memory, CMOS memory or the like, for storing therein an NC program and various molding condition parameters (injection speed, injection end screw position and the like); and 104 and 105, an input circuit and an output circuit, respectively. Respective busses of the aforesaid elements 101 - 105 are connected to a bus arbiter controller (hereinafter, referred to as BAC) 108 for control of selection of a bus to be enabled at a certain information processing cycle of the NC unit 100. Further, a manual data input device with a CRT display (hereinafter, referred to as CRT/MDI) 110 is connected to the BAC 108 through an operator panel controller 109, so that an operator is permitted to operate various operative keys of the CRT/MDI 110 including software keys and ten-key pad, so as to input various control parameters including the molding condition parameters.

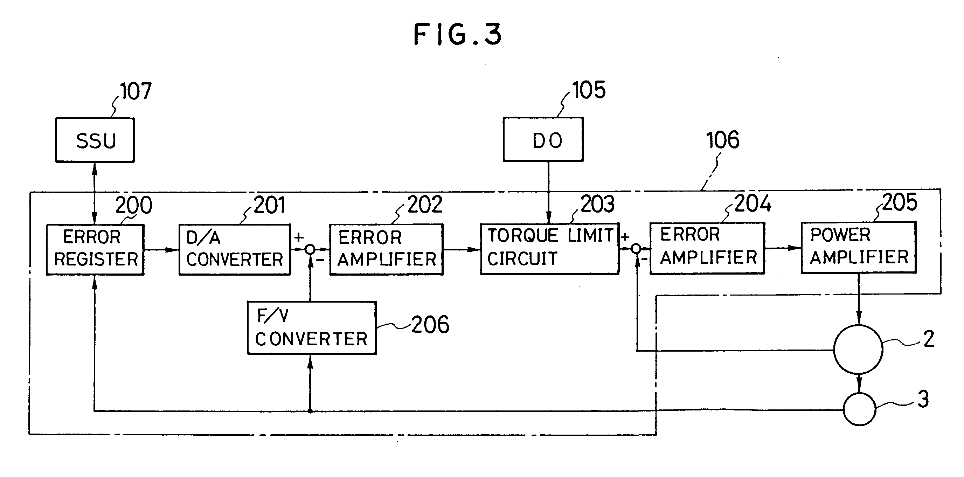

As shown in Fig. 3, the servo circuit 106 for controlling the drive of the injection servomotor 2 comprises an error register 200 arranged to receive a command pulse train, which is distributed from the NCCPU 101 through the servo interface 107 and is indicative of a target servomotor rotational position, and a pulse train supplied from the pulse coder 3 and indicative of an actual servomotor rotational position. An output from the error register 200 indicative of an actual positional error is converted into a velocity command voltage by a D/A converter 201, and a frequency at which the pulses delivered from the pulse coder 3 are generated is converted into a voltage indicative of an actual rotational rate of the servomotor by means of a F/V converter 206, and further the error (velocity error) between the two voltages is amplified by an error amplifier 202 so as to obtain a torque command voltage. A torque limit circuit 203, on one hand, receives the torque command voltage, and, on the other hand, receives, through the output circuit 105, a torque limit value delivered from the PMCCPU 102, so as to limit the torque command value up to the torque limit value. Further, the error between the torque command voltage after torque restriction and a voltage, which is detected by an appropriate means (not shown) and is indicative of an actual motor drive current which corresponds to an actual motor output torque, is amplified by an error amplifier 204 and a power amplifier 205, and then the thus amplified error is applied to the injection servomotor 2 for control of the motor output torque.

Further, the injection molding machine comprises a feed stop function for temporarily stopping the pulse distribution when the stored value of the error register 200, i.e., the actual positional error, exceeds a predetermined value (hereinafter, referred to as feed stop positional error) set beforehand, until the actual positional error becomes less than the feed stop positional error again.

In the following, operation of the injection molding machine constructed as above will be explained.

Prior to execution of injection molding cycle by the injection molding machine, an operator operates a keyboard of the CRT/MDI 110 so as to input the feed stop positional error Fs and the torque limit value Ts, which have been explained hereinabove with reference to Fig. 1. The torque limit value Ts is set to a value which permits to achieve the equilibrium of the output torque of the injection servomotor 2 and the resin pressure at an initial stage of injection control. The feed stop positional error Fs is set to a value which permits the injection operation to start with the injection speed which rises sharply with operation of the servo circuit 106, when the application of the torque limit value Ts to the torque limit circuit 203 is released under a condition that the actual positional error accumulated in the error register 200 of the servo circuit 106 has reached the value of Fs. In other words, the value Fs is set to a value which is different from, e.g., larger than an ordinary feed stop positional error for prevention of overshoot and undershoot with respect to the target servomotor rotational position during a conventionally known acceleration/deceleration operation. Further, setting of various control parameters other than the values Ts, Fs is carried out. Whereupon, the thus set control parameters are stored in predetermined address regions of the shared RAM 103, respectively, under the control of the PMCCPU 102.

During operation of the injection molding machine, the NCCPU 101 performs the pulse distribution to servo circuits of associated operating sections of the machine through the servo interface 107, and the PMCCPU 102 performs sequence control for associated operating sections, in accordance with the NC program and various control parameters stored in the shared RAM 103 and with the sequence program stored in the ROM 102a. As a result, the injection molding cycle which consists of a series of processes of mold-opening, mold-closing, mold-clamping, metering, injection, hold, ejection of a molded product, etc. is carried out in basically the same manner as in the conventional molding machine.

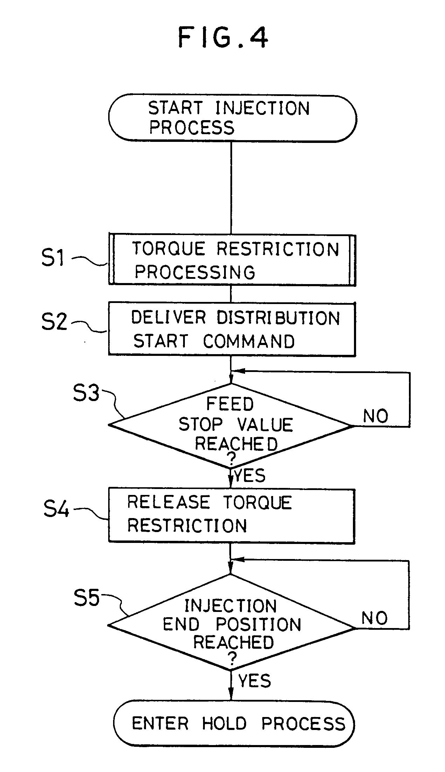

In the injection process, the PMCCPU 102 executes the processing shown in Fig. 4.

At the start of the injection process, the PMCCPU 102 reads out the torque limit value Ts from the shared RAM 103 and sets the same to the torque limit circuit 203 of the servo circuit 106 through the BAC 108 and the output circuit 105 (the step S1), and then delivers an injection start command to the NCCPU 101 through the BAC 108 and the shared RAM 103 (the step S2). Upon receipt of this command, the NCCPU 101 starts pulse distribution, which is to be executed by the NCCPU at predetermined intervals of cycle in accordance with the molding conditions stored in the shared RAM 103. As a result, as shown in Fig. 1, a command pulse train is supplied from the NCCPU 101 to the error register 200 of the servo circuit 106. On the other hand, the torque limit value Ts has been already set in the aforesaid step S2, and accordingly, the output torque of the injection servo motor 2 is so controlled as to balance with the resin pressure. As a result, the rotary movement of the injection servomotor 2 and the axial movement of the screw 1 are substantially prevented. In this manner, the supply of the command pulse train is continued while rotation of the injection servomotor 2 is kept stopped, and thus, pulses accumulated in the error register 200, i.e., an actual positional error increases with the elapse of time.

During this time period, the NCCPU 101 writes, at predetermined intervals of cycle, the actual positional error, which is read out from the error register 200 through the servo interface 107, into the shared RAM 103. On the other hand, the PMCCPU 102 determines whether or not the actual positional error written into the shared RAM 103 reaches the feed stop positional error Fs (the step S3). When the actual positional error reaches the value of Fs, the PMCCPU causes the torque limit value to change from the value Fs to a value corresponding to the maximum output torque of the injection servomotor 2, for instance, to thereby release the torque restriction associated with the injection servomotor (the step S4).

When the torque restriction is released, the torque limit circuit 203 permits supply of a large torque command voltage to the error amplifier 204, which is delivered from the error amplifier 202 and has a large quantity corresponding to a large actual positional error which is equal to the value Fs stored in the error register 200 at that time. As a result, in accordance with a control output from the power amplifier 205 corresponding to the large torque command voltage, a great drive current flows in the injection servomotor 2, so that the injection servomotor 2 having been kept unrotatable until when the torque restriction is released, is started to rotate with a great torque. As a result, the screw 1 is axially driven with a great drive force by means of the injection servomotor 2 through the rotary motion/linear motion conversion mechanism. In other words, the injection speed rises sharply.

Thereafter, when the actual positional error reaches the feed stop positional error Fs during the injection operation by the screw 1, the pulse distribution for the injection servomotor 2 is temporarily stopped, which is restarted when the actual positional error becomes less than the value Fs again. During the injection operation, the PMCCPU 102 determines whether or not the pulse distribution up to the injection end screw position is finished, i.e., whether the screw 1 reaches its injection end position (the step S5). If so, the PMCCPU 102 completes the processing of Fig. 4. Whereupon, the conventionally known hold process is entered.

The present invention is not limited to the aforementioned embodiment, but may be modified in various ways. For example, although, in the embodiment, the torque limit value Ts employed in an initial stage of the injection process is stored beforehand in the shared RAM 103, the torque limit value Ts may be described in the sequence program. Further, the present invention may be applied to an injection molding machine equipped with no feed stop function although the foregoing embodiment is applied to the injection molding machine having the feed stop function. In this case, a predetermined positional error corresponding to the feed stop positional error Fs is stored beforehand in the shared RAM 103. Moreover, although, in the embodiment, the feed stop function of the injection molding machine is employed for obtaining the sharply rising injection speed, this feed stop function may be used in an ordinary manner for prevention of overshoot and undershoot in acceleration/deceleration control, whereas the value of Fs for embodying the method of the invention is independently set in the shared RAM 103. In this case, the injection molding machine is provided with an ordinary feed stop function and the function of sharply raising the injection speed according to the method of the present invention.

## Claims

1. An injection control method in an electrically-operated injection molding machine of a type driving an injection servomotor (2) in accordance with an error between a target value and an actual value of an injection control parameter, characterised by the steps of:
(a) substantially preventing drive of the injection servomotor (2) at an initial stage of injection control, while the target value of the injection control parameter is increased; and
(b) starting the drive of the injection servomotor (2) when the error between the target value and the actual value of the injection control parameter reaches a predetermined value (Fs).

2. An injection control method according to claim 1, wherein said injection control method is applied to an injection molding machine of a type having an injection screw (1) driven by the injection servomotor (2), and periodically distributing a command pulse train to a servo circuit (106) operatively connected to the injection servomotor (2) so as to provide a target value of a rotational position, as said injection control parameter, of the injection servomotor;
wherein said step (a) includes a step of setting a torque limit value (Ts) for restricting an output torque of the injection servomotor (2) to a value enough to establish an equilibrium of the output torque of the injection servomotor (2) and a pressure of molten resin acting upon said injection screw (1), in an initial stage of supply of the command pulse train, to thereby restrict the output torque of the injection servomotor (2); and
wherein said step (b) includes a step of releasing the restriction of the output torque of the injection servomotor (2) when the error between the target rotational position of the injection servomotor (2) and an actual rotational position thereof increases to said predetermined value (Fs).

3. An injection control method according to claim 2, wherein the distribution of said command pulse train is temporarily stopped when the error between the target rotational position and the actual rotational position of the injection servomotor reaches said predetermined value (Fs) and until said error becomes less than said predetermined value (Fs).

## Patentansprüche

1. Verfahren zur Einspritzkontrolle in einer elektrisch angetriebenen Spritzgießmaschine einer Art, die einen Einspritz-Servomotor (2) in Übereinstimmung mit einer Abweichung zwischen einem Ziel-Wert und einem tatsächlichen Wert eines Einspritzsteuerparameters treibt,
**gekennzeichnet** durch Schritte zum
(a) im wesentlichen Verhindern des Treibens des Einspritz-Servomotors (2) in einer Anfangsstufe der Einspritzkontrolle, während der Ziel-Wert des Einspritzsteuerparameters erhöht wird, und
(b) Starten des Treibens des Einspritz-Servomotors (2), wenn die Abweichung zwischen dem Ziel-Wert und dem tatsächlichen Wert des Einspritzsteuerparameters einen vorbestimmten Wert (Fs) erreicht.

2. Verfahren zur Einspritzkontrolle nach Anspruch 1, wobei das Verfahren zur Einspritzkontrolle auf eine Spritzgießmaschine einer Art angewendet ist, die eine Einspritzschnecke (1) hat, welche durch den Einspritz-Servomotor (2) getrieben wird, und periodisch eine Befehlsimpulsfolge auf eine Servoschaltung (106) verteilt, die wirksam mit dem Einspritz-Servomotor (2) verbunden ist, um auf diese Weise einen Ziel-Wert einer Drehstellung als den Einspritzsteuerparameter des Einspritz-Servomotors zu erzeugen,
wobei der Schritt (a) einen Schritt enthält zum Einstellen eines Drehmomentgrenzwerts (Ts) zum Begrenzen eines Ausgangsdrehmoments des Einspritz-Servomotors (2) auf einen Wert, der ausreichend ist, um ein Gleichgewicht des Ausgangsdrehmoments des Einspritz-Servomotors (2) und eines Drucks von geschmolzenem Kunstharz, der auf die Einspritzschnecke (1) in einer Anfangsstufe der Zuführung der Befehlsimpulsfolge einwirkt, herzustellen, um dadurch das Ausgangsdrehmoment des Einspritz-Servomotors zu begrenzen, und
wobei der Schritt (b) einen Schritt enthält zum Aufheben der Begrenzung des Ausgangsdrehmoments des Einspritz-Servomotors (2), wenn die Abweichung zwischen der Ziel-Drehstellung des Einspritz-Servomotors (2) und einer tatächlichen Drehstellung desselben auf den vorbestimmten Wert (Fs) ansteigt.

3. Verfahren zur Einspritzkontrolle nach Anspruch 2, bei dem die Verteilung der Befehlsimpulsfolge vorübergehend gestoppt wird, wenn die Abweichung zwischen der Ziel-Drehstellung und der tatsächlichen Drehstellung des Einspritz-Servomotors den vorbestimmten Wert (Fs) erreicht, bis die Abweichung kleiner als der vorbestimmte Wert (Fs) ist.

## Revendications

1. Une méthode de réglage de l'injection dans une machine de moulage par injection à commande électrique d'un type entraînant un servomoteur d'injection (2) selon une erreur entre une valeur recherchée et une valeur réelle d'un paramètre de commande d'injection, caractérisée par les opérations consistant à :
(a) empêcher pratiquement l'entraînement du servomoteur d'injection (2) à un stade initial de la commande d'injection, tandis que la valeur recherchée du paramètre de commande d'injection est augmentée ; et
(b) démarrer l' entraînement du servomoteur d'injection (2) lorsque l'erreur entre la valeur recherchée et la valeur réelle du paramètre de commande d'injection atteint une valeur (Fs) déterminée à l'avance.

2. Une méthode de réglage de l'injection selon la revendication 1, dans laquelle ladite méthode de commande d'injection est appliquée à une machine de moulage par injection d'un type présentant une vis d'injection (1) entraînée par le servomoteur d'injection (2), et en répartissant de manière périodique un train d'impulsions d'ordre à un circuit d'asservissement (106) relié de manière opérationnelle au servomoteur d'injection (2) afin de fournir une valeur recherchée d'une position de rotation, en tant que paramètre de commande d'injection, du servomoteur d'injection ;
dans laquelle ladite opération (a) comprend une opération de réglage d'une valeur (Ts) de limite de couple pour restreindre un couple de sortie du servomoteur d'injection (2) à une valeur suffisante pour établir un équilibre du couple de sortie du servomoteur d'injection (2) et une pression de résine fondue agissant sur ladite vis d'injection (1), dans un stade initial d'amenée du train d'impulsions d'ordre, afin de restreindre ainsi le couple de sortie du servomoteur d'injection (2) ; et
dans laquelle ladite opération (b) comprend une opération consistant à libérer la restriction du couple de sortie du servomoteur d'injection (2) quand l'erreur entre la position en rotation recherchée du servomoteur d'injection (2) et une position de rotation réelle de ce dernier augmente à ladite valeur (Fs) déterminée à l'avance.

3. Une méthode de réglage de l'injection selon la revendication 2, dans laquelle la répartition dudit train d'impulsions d'ordre est stoppée de manière temporaire quand l'erreur entre la position de rotation recherchée et la position de rotation réelle du servomoteur d'injection atteint ladite valeur (Fs) déterminée à l'avance et jusqu'à ce que ladite erreur devienne inférieure à ladite valeur (Fs) déterminée à l'avance.
